# EUROPÄISCHE PATENTSCHRIFT

(11) **EP 0 819 403 B1**
(45) Veröffentlichungstag und Bekanntmachung des Hinweises auf die Patenterteilung: **01.09.1999**
(21) Anmeldenummer: 97109725.8
(22) Anmeldetag: 14.06.1997
(51) Int. Cl.: A47L 15/00, A47L 21/00

(54) **Reinigungsvorrichtung für einen Portionierer**
Device for cleaning ice-cream scoops
Dispositif pour nettoyer des cuillères pour boules de crème glacée

(30) Priorität: 29.06.1996 DE 19626207
(43) Veröffentlichungstag der Anmeldung: 21.01.1998
(73) Patentinhaber: SCHÜLLING, Christof, D-97522 Sand (DE)
(72) Erfinder: SCHÜLLING, Christof, D-97522 Sand (DE)
(74) Vertreter: Pöhner, Wilfried Anton, Dr.

(56) Entgegenhaltungen:
- EP-A- 0 838 158
- DE-A- 3 213 488
- DE-C- 506 786
- US-A- 2 665 440

## Beschreibung

Die Erfindung bezieht sich auf eine Reinigungsvorrichtung für einen Portionierer mit löffelförmigem Kopf, vorzugsweise einen Eisportionierer, die einen Anschluß für eine druckbeaufschlagte Reinigungsflüssigkeit aufweist und mit Düsen, die über ein Ventil mit dem Anschluß verbunden sind, sowie einer Auslösevorrichtung, während deren Betätigung das Ventil geöffnet ist, versehen ist.

Eine derantige Reinigungsvorrichtung ist aus der Druckschrift DE-A-3 213 488 bekannt.

Beim Verkauf unverpackter Lebensmittel, insbesondere von Eis, wird die Ware meist mit einem Portionierlöffel aus einem Vorratsbehälter entnommen und in ein anderes Gefäß, beispielsweise einen Eisbecher, umgefüllt, wobei der Portionierer oft auch zur Abmessung der abgefüllten Menge dient. In aller Regel hat der Kunde die Auswahl zwischen unterschiedlichen Lebensmitteln, zum Beispiel mehreren Eissorten, während aus Gründen der bequemeren Handhabung und zur Vermeidung höherer Anschaffungskosten die Benutzung eines einzigen Portionierers Üblich ist. Um die allmähliche Vermischung der Lebensmittel zu vermeiden, hygienische Probleme auszuschließen, eine exakte Abmessung und die Funktionsfähigkeit ggf. vorhandener Auswurfmesser sicherzustellen, ist daher eine regelmäßige Reinigung des Portionierers von anhaftenden Resten erforderlich.

Weit verbreitet sind zu diesem Zweck Wasserbecken, in die der Portionierer zur Säuberung eingetaucht wird und in denen das Wasser meist bis zu einem Überlauf aufgestaut ist. Mit der Zeit findet jedoch eine Verschmutzung und Verkeimung des Beckeninhaltes statt, sofern nicht ein erheblicher Wasserverbrauch in Kauf genommen und ständig Frischwasser zugeführt wird. Eine hygienisch einwandfreie Reinigung läßt sich daher auf diese Weise nicht gewährleisten.

In einer Weiterentwicklung zeigt die Druckschrift FR-A-24 25 833 eine Vorrichtung zur Reinigung von Eisportionierern, die hygienische Probleme ausschließt. Sie ist mit einer Leitungsspirale versehen, die auf der Innenseite eine Vielzahl von Düsen aufweist und in die der Portionierer eingeschoben wird. Ein Auslösehebel in der Spirale öffnet bei Betätigung ein Ventil, das die Düsen mit einem Wasseranschluß verbindet. Durch die auftreffenden Wasserstrahlen wird der Portitionierer gereinigt, wobei das verschmutzte Wasser frei abläuft. Obwohl das Ventil nur bei eingeschobenem Portionierer geöffnet ist, werden auch in diesem Fall durch das allseitige Besprühen erhebliche Wassermengen verbraucht. Ein großer Teil des Verbrauchs ist darin begründet, daß die Lage des Portionierers lediglich grob bestimmt ist, so daß die Düsen ein großes Volumen im Inneren der Spirale beaufschlagen müssen. Weiterhin erfährt die Innenseite des Portionierlöffels, die aufgrund der konkaven Gestalt sowie des meist vorhandenen Auswurfmessers in besonderer Weise zur Verschmutzung neigt, die gleiche Reinigungsintensität wie die Portioniereraußenseite, die i.a. nahezu sauber ist.

Vor diesem Hintergrund hat sich die Erfindung die Entwicklung einer Reinigungsvorrichtung zur Aufgabe gestellt, die eine hygienische Säuberung von Portionierern bei minimalem Wasserverbrauch gewährleistet.

Diese Aufgabe wird erfindungsgemäß dadurch gelöst, daß die Reinigungsvorrichtung einen Waschteller aufweist, die Auslösevorrichtung, vorzugsweise im Zentrum des Waschtellers, auf einer Erhöhung angeordnet ist, deren Durchmesser der Ausnehmung des Portioniererkopfes entspricht, die Düsen auf der Erhöhung angeordnet und in Richtung nach oben ausgerichtet sind und die Erhöhung von einer umlaufenden Abflußrinne mit Ablauföffnungen umgeben ist.

Mit dem Ziel einer optimalen Säuberung ist die Reinigungsvorrichtung mit einem Waschteller versehen, auf dem eine Auslösevorrichtung angeordnet ist. Die vorzugsweise im Zentrum des Waschtellers angebrachte Auslösevorrichtung öffnet das Ventil, wenn der Kopf des Portionierers auf der Auslösevorrichtung befindlich ist. Ihre Anordnung erfolgt auf einer Erhöhung, deren Durchmesser in etwa dem des Portioniererkopfes entspricht.

Auf der Erhöhung befinden sich gleichfalls die Düsen, die in senkrechter oder schräger Richtung nach oben ausgerichtet sind. Wird der Kopf des Portionierers auf die Auslöseeinheit der Reinigungsvorrichtung aufgesetzt, so wird seine Innenfläche folglich aus einem minimalen Abstand durch die Reinigungsflüssigkeit besprüht und damit intensiv gereinigt. Dabei ist der Kopf im aufgesetzten Zustand vorzugsweise lediglich durch einen schmalen Spalt von der Erhöhung beabstandet, so daß sich die Reinigungsflüssigkeit im Zwischenraum staut und eine gründliche und gleichmäßige Säuberung der gesamten inneren Oberfläche des Kopfes bewirkt wird. Die verschmutzte Reinigungsflüssigkeit läuft in eine Abflußrinne im äußeren Bereich des Waschtellers ab, die mit einer oder mehreren offenen Abflußöffnungen vorsehen ist.

Die vorgeschlagene Reinigungsvorrichtung gestattet die hygienisch einwandfreie Säuberung eines Portioniererkopfes mit geringstem Flüssigkeitsverbrauch, da die Düsen ausschließlich auf die Kopfinnenseite ausgerichtet sind, deren Lage bei Betätigung der Auslöseeinheit präzise definiert ist. Als Reinigungsflüssigkeit bietet sich heißes oder kaltes Wasser an, dem gegebenenfalls ein Desinfektions- oder Spülmittel zugesetzt ist. Die Druckbeaufschlagung kann durch Anschluß an das öffentliche Wassernetz erfolgen, wenngleich insbesondere bei mobilen Verkaufsständen die Versorgung des Anschlusses mit einer Pumpe aus einem Vorratskanister bevorzugt ist. Als Material des Waschtellers bieten sich Metalle, etwa Messing oder Stahl, oder Kunststoffe wie Polyamid an.

In einer vorteilhaften Weiterbildung der Erfindung wird ein Knopf als Auslöseeinheit vorgeschlagen. Ist er in etwa senkrechter Richtung verschieblich, so ist die Verwendung eines leichtgängigen Knopfes denkbar, der sich bereits durch das Eigengewicht des Portionierers betätigen läßt. Von Vorteil ist ein Überstand des Knopfes über die Erhöhung um einen Betrag, der in etwa der Tiefe der Ausnehmung des Portioniererkopfes entspricht. Als alternative zu mechanischen Auslöseeinheiten sind beispielsweise elektrische Druckkontakte oder optische Detektoren denkbar.

Die Kontaktfläche zwischen Portionierer und Auslöseknopf erfährt infolge schlechter Zugänglichkeit für die Reinigungsflüssigkeit allenfalls eine mäßige Säuberung und ist daher zu minimieren. Die Reinigung dieses Bereichs wird jedoch verbessert, wenn der Portionierer geringfügig gegenüber dem Kopf bewegt wird. Um dabei ein Verkratzen der Portioniererinnenseite zu vermeiden hat sich eine kugelförmige oder halbkugelförmig abgerundete Gestalt des Knopfes bewährt, der in diesem Fall gleichzeitig eine sehr geringe Auflagefläche hat.

Als zweckmäßig erweist sich, den Waschteller in Anpassung an die meist halbkugelförmige Gestalt gebräuchlicher Portioniererköpfe rotationssymmetrisch auszuführen. Zudem wird auf dieser Weise eine einfache Fertigung des Waschtellers als Drehteil ermöglicht.

Ein mechanisch sehr einfacher Aufbau der Vorrichtung wird erreicht, indem Auslöseknopf und das Verschlußelement des Ventils, beispielsweise ein Ventilteller, starr über eine Stange verbunden sind. Damit ist eine preiswerte Fertigung mit einer minimalen Anzahl beweglicher Teile möglich.

Nach einer Reinigung verbleiben auf der Oberfläche des Portionierers stets Reste der Reinigungsflüssigkeit. Zu ihrer Entfernung wird im Stande der Technik ein Schwamm oder Lappen verwendet, der jedoch aufgrund der ständigen Feuchtigkeit Mikroorganismen hervorragende Lebensbedingungen bietet und somit ein erhebliches hygienisches Problem darstellt. Von Vorteil ist daher eine Leiste aus elastischem Material, etwa Gummi, die beispielsweise am Rand des Waschtellers angebracht ist. Durch Abklopfen des Portionierers an der Leiste lassen sich verbleibende Tropfen der Reinigungsflüssigkeit nahezu vollständig von seiner Oberfläche entfernen.

Um auch die Rückseite des Portioniererkopfes zu reinigen, wird oberhalb des Waschtellers ein Sprühkopf angeordnet, der eine oder mehrere Düsen aufweist. Die Düsen des Sprühkopfes, die gleichfalls mittels der Auslösevorrichtung durch dasselbe oder ein anderes Ventil wie die Düsen des Waschtellers betätigt werden, sind auf die Erhöhung ausgerichtet. Da die Lage des Portioniererkopfes bei Betätigung des Auslöseknopfes präzise definiert ist, läßt sich durch eine sorgfältige Ausrichtung der Düsen ein minimaler Verbrauch an Reinigungsflüssigkeit sicherstellen.

Von Vorteil ist es, den Sprühkopf nicht senkrecht sondern schräg oberhalb der Erhöhung anzuordnen, d.h. in horizontaler Richtung gegen die Erhöhung zu versetzen. In der Folge läßt er sich in geringem Abstand zur Erhöhung anordnen, ohne das Aufsetzen des Portionierers zu behindern. Ein geringer Abstand erleichtert dabei nicht nur die Ausrichtung der Düsen sondern reduziert auch Geschwindigkeitsverluste der Reinigungsflüssigkeit zwischen dem Düsenaustritt und der Oberfläche des Portionierers, so daß sich die Reinigungswirkung verbessert.

Zweckmäßig ist der Sprühkopf an einem Haltearm befestigt, über den auch die Zufuhr der Reinigungsflüssigkeit erfolgt. Weiterhin läßt sich die Reinigungsvorrichtung in ein Becken einsetzen, in welches die verschmutzte Reinigungsflüssigkeit abläuft und das sich seinerseits in eine Verkaufstheke integrieren läßt. Ebenso wie bei der elastischen Leiste zum Abklopfen des Portionierers ist auch die Befestigung des Haltearms für den Sprühkopf am Becken denkbar.

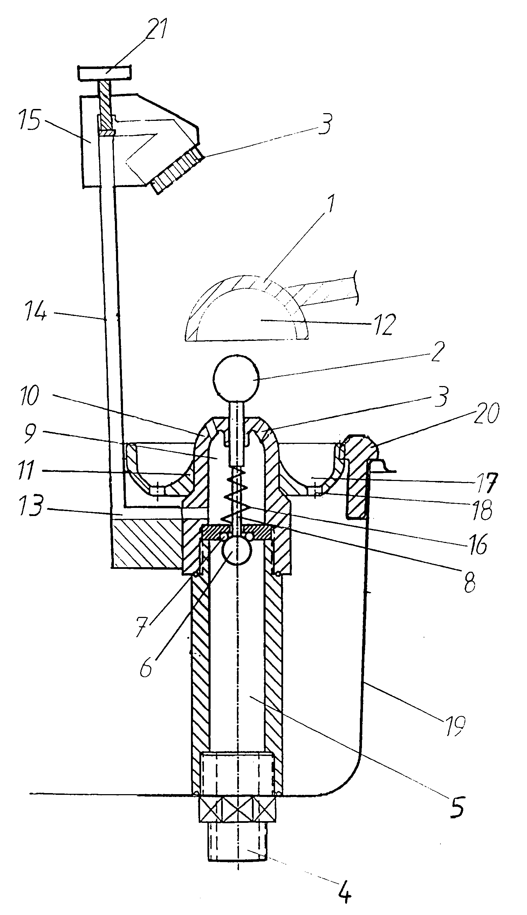

Weitere Einzelheiten, Merkmale und Vorteile der Erfindung lassen sich dem nachfolgenden Beschreibungsteil entnehmen, in dem anhand der Zeichnung ein Ausführungsbeispiel näher erläutert wird. Die Zeichnung zeigt den Schnitt durch eine erfindungsgemäße Reinigungsvorrichtung in prinzipienhafter Darstellung.

Die Vorrichtung dient zur Reinigung eines Portioniererkopfes (1), der auf einen kugelförmigen Knopf (2) aufgesetzt und in dieser Position durch Düsen (3) mit einer druckbeaufschlagten Reinigungsflüssigkeit besprüht wird. Die Reinigungsflüssigkeit, bei der es sich zweckmäßig um Leitungswasser handelt, gelangt durch einen Anschluß (4) zunächst in den unteren Hohlraum (5) der Vorrichtung. Wird der Portioniererkopf (1) auf den Knopf (2) aufgedrückt, so wird die Kugel (6), die gemeinsam mit der Dichtung (7) ein Ventil bildet, über die Stange (8) nach unten gedrückt. In der Folge entsteht ein Spalt zwischen der Kugel (6) und ihrer Dichtung (7), so daß die druckbeaufschlagte Flüssigkeit in den oberen Hohlraum (9) der Vorrichtung gelangt. Während ein Teil der Flüssigkeit durch Düsen (3) in der Erhöhung (10) des Waschtellers (11) in die Ausnehmung (12) des Portioniererkopfes (1) gesprüht wird, gelangt der andere Teil durch eine Leitung (13) in den am Haltearm (14) befestigten Sprühkopf (15). Durch dessen Düsen (3) wird somit auch die Rückseite des Portioniererkopfes (1) gesäubert.

Wird der Portioniererkopf (1) vom Knopf (2) abgehoben, schließt die Feder (16) das Ventil und die Flüssigkeitszufuhr zu den Düsen (3) wird unterbrochen. Somit zeichnet sich die Vorrichtung durch einen ausgesprochen geringen Flüssigkeitsverbrauch aus. Die verschmutzte Flüssigkeit läuft stets frei über die Abflußrinne (17) des Waschtellers (11) durch Abflußöffnungen (18) in ein Becken (19), das gleichfalls mit einem Auslauf versehen ist, ab, so daß der Portioniererkopf (1) nicht mit ihr in Kontakt kommt. Hygienische Probleme durch eine Ansiedlung von Keimen sind somit ausgeschlossen. Eine Leiste (20) aus elastischem Material am Rand des Beckens (19) dient zum Abklopfen des Portionierers nach Beendigung des Reinigungsvorgangs, um Flüssigkeitsreste zu entfernen.

Im Ergebnis entsteht eine Reinigungsvorrichtung, welche die Säuberung eines Lebensmittelportionierers auf hygienische Weise und mit minimalem Flüssigkeitsverbrauch gestattet.

## Patentansprüche

1. Reinigungsvorrichtung für einen Portionierer mit löffelförmigem Kopf (1), vorzugsweise einen Eisportionierer, die einen Anschluß (4) für eine druckbeaufschlagte Reinigungsflüssigkeit aufweist und mit Düsen (3), die über ein Ventil (6, 7) mit dem Anschluß (4) verbunden sind, sowie einer Auslösevorrichtung (2), während deren Betätigung das Ventil (6, 7) geöffnet ist, versehen ist, **dadurch gekennzeichnet**, daß
- die Reinigungsvorrichtung einen Waschteller (11) aufweist,
- die Auslösevorrichtung, vorzugsweise bim Zentrum des Waschtellers (11), auf einer Erhöhung (10) angeordnet ist, deren Durchmesser der Ausnehmung (12) des Portioniererkopfes (1) entspricht,
- die Düsen (3) auf der Erhöhung (10) angeordnet und in Richtung nach oben ausgerichtet sind
- und die Erhöhung (10) von einer umlaufenden Abflußrinne (17) mit Ablauföffnungen (18) umgeben ist.

2. Reinigungsvorrichtung nach Anspruch 1, **dadurch gekennzeichnet**, daß die Auslösevorrichtung ein Knopf (2) ist.

3. Reinigungsvorrichtung nach Anspruch 2, **dadurch gekennzeichnet,** daß der Knopf (2) kugelförmig ist.

4. Reinigungsvorrichtung nach einem der vorhergehenden Ansprüche, **dadurch gekennzeichnet**, daß der Waschteller (11) rotationssymmetrisch ist.

5. Reinigungsvorrichtung nach einem der vorhergehenden Ansprüche, **dadurch gekennzeichnet**, daß Knopf (2) und Ventil (6, 7) starr verbunden sind.

6. Reinigungsvorrichtung nach einem der vorhergehenden Ansprüche, **dadurch gekennzeichnet**, daß die Reinigungsvorrichtung eine Leiste (20) aus elastischem Material aufweist.

7. Reinigungsvorrichtung nach einem der vorhergehenden Ansprüche, **dadurch gekennzeichnet**, daß oberhalb des Waschtellers (11) ein Sprühkopf (15) mit einer oder mehreren Düsen (3) angeordnet ist, die auf die Erhöhung (10) ausgerichtet und über ein durch den Knopf (2) betätigtes Ventil (6, 7) mit der Reinigungsflüssigkeit beaufschlagbar sind.

8. Reinigungsvorrichtung nach Anspruch 7, **dadurch gekennzeichnet**, daß der Sprühkopf (15) in horizontaler Richtung gegen die Erhöhung (10) versetzt angeordnet ist.

9. Reinigungsvorrichtung nach Anspruch 7 oder 8, **dadurch gekennzeichnet,** daß der Sprühkopf (15) an einem Haltearm (14) befestigt ist.

10. Reinigungsvorrichtung nach einem der vorhergehenden Ansprüche, **dadurch gekennzeichnet**, daß die Reinigungsvorrichtung in ein Becken (19) eingesetzt ist.

## Claims

1. A cleaning device for a scoop with a spoon-shaped head (1), preferably a ice-cream scoop, which has a connection (4) for a pressurised cleaning liquid and is provided with nozzles (3), which are joined to the connection (4) via a valve (6, 7), as well as a triggering device (2), the valve (6, 7) being opened when the triggering device is activated, **wherein**
- the cleaning device has a washing plate (11),
- the triggering device (2) is disposed in the centre of washing plate (11) on a raised part (10) whose diameter corresponds to the recess (12) of scoop head (1),
- the nozzles (3) are disposed on the raised part (10) and are directed upwards
- and the raised part (10) is surrounded by a circumferential drainage trough (17) with outlets (18).

2. Cleaning device according to claim 1, **wherein** the triggering device is a button (2).

3. Cleaning device according to claim 2, **wherein** button (2) is spherical.

4. Cleaning device according to one of the preceding claims, **wherein** washing plate (11) is rotationally symmetrical.

5. Cleaning device according to one of the preceding claims, **wherein** button (2) and valve (6, 7) are connected rigidly.

6. Cleaning device according to one of the preceding claims, **wherein** the cleaning device has a rail (20) made from elastic material.

7. Cleaning device according to one of the preceding claims, **wherein** above washing plate (11) is disposed a spray head (15) with one or more nozzles (3) which are directed toward the raised part (10) and can be impinged with the cleaning liquid via a valve (6, 7) activated by button (2).

8. Cleaning device according to claim 7, **wherein** the spray head (15) is disposed in a horizontal position displaced against raised part (10).

9. Cleaning device according to claim 7 or 8, **wherein** the spray head (15) is affixed to a holding arm (14).

10. Cleaning device according to one of the preceding claims, **wherein** the cleaning device is inserted into a basin (19).

## Revendications

1. Dispositif de nettoyage pour portionneur à tête en forme de cuiller (1), de préférence pour cuiller à glace, doté d'un raccord (4) pour liquide de nettoyage sous pression et de buses (3) reliées au raccord (4) par l'intermédiaire d'une vanne (6, 7), ainsi que d'un dispositif de déclenchement (2) dont l'actionnement entraîne l'ouverture de la vanne (6, 7), **caractérisé en ce que**
- le dispositif de nettoyage présente une assiette de lavage (11),
- le dispositif de déclenchement (2) est placé sur une partie surélevée (10) au centre de l'assiette de lavage (11), dont le diamètre correspond à celui du creux (12) de la tête de la cuiller à glace (1),
- les buses (3) sont disposées sur la partie surélevée (10) et sont dirigées vers le haut
- et en ce que la partie surélevée (10) est entourée d'une rainure d'écoulement (17) pourvue de trous d'évacuation (18).

2. Dispositif de nettoyage selon la revendication 1, **caractérisé en ce que** le dispositif de déclenchement est un bouton (2).

3. Dispositif de nettoyage selon la revendication 2, **caractérisé en ce que** le bouton (2) a une forme sphérique.

4. Dispositif de nettoyage selon l'une des revendications précédentes, **caractérisé en ce que** la forme de l'assiette de lavage (11) est définie par symétrie de révolution.

5. Dispositif de nettoyage selon l'une des revendications précédentes, **caractérisé en ce que** le bouton (2) et la vanne (6, 7) sont reliés par un élément rigide.

6. Dispositif de nettoyage selon l'une des revendications précédentes**, caractérisé en ce que** le dispositif de nettoyage présente une bande (20) en matière élastique.

7. Dispositif de nettoyage selon l'une des revendications précédentes, **caractérisé en ce que** le dispositif de nettoyage présente au-dessus de l'assiette de lavage (11), un pulvérisateur (15) doté d'une ou de plusieurs buses (3), dirigées vers la partie surélevée (10) et alimentées en liquide de nettoyage par l'intermédiaire d'une vanne (6, 7) actionnée par le bouton (2).

8. Dispositif de nettoyage selon la revendication 7, **caractérisé en ce que** le pulvérisateur (15) est horizontalement décalé par rapport à la partie surélevée (10).

9. Dispositif de nettoyage selon la revendication 7 ou 8**, caractérisé en ce que** le pulvérisateur (15) est fixé sur un bras (14).

10. Dispositif de nettoyage selon l'une des revendications précédentes, **caractérisé en ce que** le dispositif de nettoyage est placé dans un bac (19).
